# EUROPEAN PATENT APPLICATION

(11) **EP 4 443 695 A1**
(43) Date of publication of application: **09.10.2024**
(21) Application number: 23178050.3
(22) Date of filing: 07.06.2023
(51) Int. Cl.: H02J 7/00

(54) **METHOD OF SMART BATTERY CONTROL**

(30) Priority: 06.04.2023 TW 112112863
(71) Applicant: Phihong Technology Co., Ltd., Taoyuan City 333 (TW)
(72) Inventor: HUNG, Ming-Huang, Taoyuan (TW)
(74) Representative: Zaboliene, Reda

(57) **Abstract**

The present invention proposes a method of smart battery control for a power supply module, where the power supply module includes a plurality of battery packs having at least a first type or second type battery pack, the method includes checking whether all battery packs are in a normal state that can be discharged and can be categorized into the first type battery pack, if yes, the power supply module discharges power by a first discharge mode; otherwise, neglecting the abnormal battery packs and forming series-connected battery pack units among the remaining battery packs, the power supply module discharging power by a second discharge mode; calculating electric energy of all battery packs, comparing the electric energy of individual series-connected battery pack unit, and scheduling the discharge priority among the series-connected battery pack units.

## Description

### TECHNICAL FIELD

The present invention relates to technology field of battery control, and more particularly, a method of smart battery control.

### BACKGROUND

In recent years, with the development of electric power tools, portable electric tools have been widely used in different fields, such as industry, construction, garden machinery and general household applications.

In most power tool applications, a battery pack having a plurality of individual battery cells is provided, which is detachable from the tool. Detachable battery packs are preferred over non-detachable or integrated battery packs because a depleted battery pack can be charged on a separate battery charger while the power tool can still be operated with a charged second battery pack.

With the advancement of related technologies of batteries equipped with electric power tools, electric power tools can be operated wirelessly, and detachable and rechargeable secondary battery packs are becoming widely used.

Such battery packs are typically part of a cordless power-tool system, which are designed and configured to operate with various cordless power tools, such as drills, circular saws and grinders. Most of the hand-held electric tools (power tools) are provided with battery slots, which can be installed with battery packs.

The power supply module of the aforementioned hand-held/portable electric tools adopt a configuration in which multiple battery packs are connected in series. In the power supply module, a plurality of battery packs, for example, four battery packs are connected in series to configure the battery module, which is arranged in the battery slot(s) for discharging the inverter in the electric tool and for powering the motor of the power tool with AC power.

An inverter is a converter that converts DC power of the battery or storage battery into AC power, which includes at least an inverter bridge, a control logic and a filter circuit.

Inverters can be widely used in electric power tools. For example, key components of electric power tools include batteries, inverter, and motor. Among them, the inverter bridging the battery and the motor is responsible for converting the DC power of the battery into the AC power required by the motor, and it undertakes the task of controlling the motor drive and electric braking.

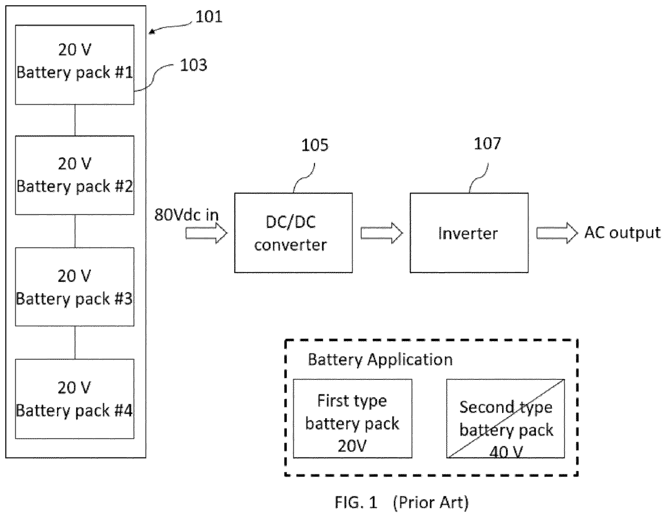

With reference to FIG. 1, in the conventional inverter related technology, the inverter system utilizes single-type batteries connected in series as the power supply module 101, for example, four 20V battery packs 103 connected in series, and feeds 80Vdc to a DC/DC converter 105 to discharging to the inverter 107, and the inverter 107 converts the fed DC power into an AC power output.

The aforementioned inverter only operates in a single slot discharge mode in which a single type of battery is connected in series, the series connected battery packs are indispensable, and the types of the battery packs must be the same. For example, the first type battery pack (20V battery pack) can be used while the second type battery pack (40V battery pack) cannot be applied to replace the first type battery pack (20V battery pack), therefore, as long as any of battery packs is removed or one of the battery packs fails, the entire power supply module 101 cannot be applied to discharging to the inverter 107.

Therefore, according to the deficiencies mentioned above, it is necessary to propose an improvement plan for the control method of the battery module used to power the inverter.

### SUMMARY OF THE INVENTION

In one aspect of the present invention, a method of smart battery control for a power supply module is proposed, where the power supply module includes a plurality of battery packs having at least a first type or second type battery pack, the method includes checking whether all battery packs are in a normal state that can be discharged and can be categorized into the first type battery pack, if yes, the power supply module discharges power by a first discharge mode; otherwise, neglecting the abnormal battery packs and forming series-connected battery pack units among the remaining battery packs, the power supply module discharging power by a second discharge mode; calculating electric energy of all battery packs, comparing the electric energy of individual series-connected battery pack unit, and scheduling the discharge priority among the series-connected battery pack units.

In one preferred embodiment, the steps of scheduling discharge priority includes: when electrical energy between the individual serial battery pack units is different, the serial battery unit with higher electrical energy is discharged preferentially; and when electric energy between the individual serial battery pack units is the same, check whether electric energy of battery packs in each serial battery pack unit is the same, enabling that serial battery pack unit composed of battery packs with the same electric energy is discharged preferentially, and serial battery pack unit composed of battery packs with different electric energies enters to waiting mode.

In one preferred embodiment, the step of checking whether the plurality of battery packs are all in a normal state includes checking whether temperatures of the plurality of battery packs are within a predetermined temperature range, and checking whether identification information and voltages of the plurality of battery packs are correct.

In one preferred embodiment, the first type battery pack has a different output voltage than that of the second type battery pack.

In one preferred embodiment, the first discharge mode is a discharge mode that all the plurality of battery packs in the power supply module are connected in series to form a single serial battery pack unit used for discharging.

In one preferred embodiment, the second discharge mode is a discharge mode that all or a portion of the plurality of battery packs in the power supply module are connected in series to form more than one serial battery pack units used for discharging.

In one preferred embodiment, the first discharge mode is performed through controlling open-circuit and closed-circuit configurations of a plurality of switches disposed between the battery packs by the controller.

In one preferred embodiment, the second discharge mode is performed through controlling open-circuit and closed-circuit configurations of the plurality of switches disposed between the serial battery pack units by the controller.

In one preferred embodiment, the controller is a processor, a microcontroller, or a logic operation unit.

In one preferred embodiment, the power supply module is used to discharge electric power to an inverter.

In another aspect of the present invention, a method of smart battery control for a power supply module is proposed, where the power supply module includes a plurality of battery packs having at least a first type or second type battery pack, the method includes the step of checking whether all battery packs are in a normal state that can be discharged and can be categorized into the first type battery pack, which includes checking whether temperatures of the plurality of battery packs are within a predetermined temperature range, and checking whether identification information and voltages of the plurality of battery packs are correct, if yes, the power supply module discharges power by a first discharge mode; otherwise, neglecting the abnormal battery packs and forming series-connected battery pack units among the remaining battery packs, the power supply module discharging power by a second discharge mode; calculating electric energy of all battery packs, comparing the electric energy of individual series-connected battery pack unit, and scheduling the discharge priority among the series-connected battery pack units.

In one preferred embodiment, the steps of scheduling discharge priority includes: when electrical energy between the individual serial battery pack units is different, the serial battery unit with higher electrical energy is discharged preferentially; and when electric energy between the individual serial battery pack units is the same, check whether electric energy of battery packs in each serial battery pack unit is the same, enabling that serial battery pack unit composed of battery packs with the same electric energy is discharged preferentially, and serial battery pack unit composed of battery packs with different electric energies enters to waiting mode.

In one preferred embodiment, the first type battery pack has a different output voltage than that of the second type battery pack.

In one preferred embodiment, the first discharge mode is a discharge mode that all the plurality of battery packs in the power supply module are connected in series to form a single serial battery pack unit used for discharging.

In one preferred embodiment, the second discharge mode is a discharge mode that all or a portion of the plurality of battery packs in the power supply module are connected in series to form more than one serial battery pack units used for discharging.

### BRIEF DESCRIPTION OF THE DRAWINGS

The components, characteristics and advantages of the present invention may be understood by the detailed descriptions of the preferred embodiments outlined in the specification and the drawings attached:
FIG. 1 shows a method of discharging power to the inverter in the single-slot discharge mode in which a single-type batteries connected in series as a power supply module according to a prior art.
FIG. 2 shows a schematic diagram of discharging to an inverter by combining a plurality of battery packs of different types according to one preferred embodiment of the present invention.
FIG. 3A shows a schematic diagram of discharging to an inverter in a single-slot discharge mode according to oner embodiment of the present invention.
FIG. 3B shows a schematic diagram of discharging to an inverter in a dual-slot discharge mode according to another embodiment of the present invention.
FIG. 4 illustrates a schematic diagram of determining the battery pack type and collecting battery pack parameters through a microcontroller (MCU) connected to a battery power supply module according to one embodiment of the present invention.
FIG. 5A illustrates a schematic diagram of discharging to the inverter in a single-slot discharge mode in which the MCU determines the type of the battery pack and the combination of switches according to one preferred embodiment of the present invention.
FIG. 5B-5C respectively illustrate schematic diagram of discharging to the inverter in a dual-slot discharge mode in which the MCU determines the type of the battery pack and the combination of switches according to one preferred embodiment of the present invention.
FIG. 6 illustrates a schematic diagram of a battery pack configured to discharge an inverter and a load connected to the inverter according to one preferred embodiment of the present invention.
FIG. 7 illustrates a flow chart of a battery control method for inverter applications according to one preferred embodiment of the present invention.

### DETAILED DESCRIPTION

Some preferred embodiments of the present invention will now be described in greater detail. However, it should be recognized that the preferred embodiments of the present invention are provided for illustration rather than limiting the present invention. In addition, the present invention can be practiced in a wide range of other embodiments besides those explicitly described, and the scope of the present invention is not expressly limited except as specified in the accompanying claims.

In view of the deficiencies in the prior art, the present invention proposes (1) to utilize a microcontroller (MCU) connected to a power supply module to determine the type of the battery pack, for example, the MCU uses a communication pin or an ID pin to identify the battery pack is the first type battery pack (type 1, 20V) or the second type battery pack (type 2, 40V), for determining the discharge mode of the power supply module; (2) the MCU can determine which way to discharge power of the power pack to the inverter, for example in single-slot discharge mode or dual-slot discharge mode, based on the type of the battery pack and the combination of switches arranged in between battery slots for mounting the battery pack.

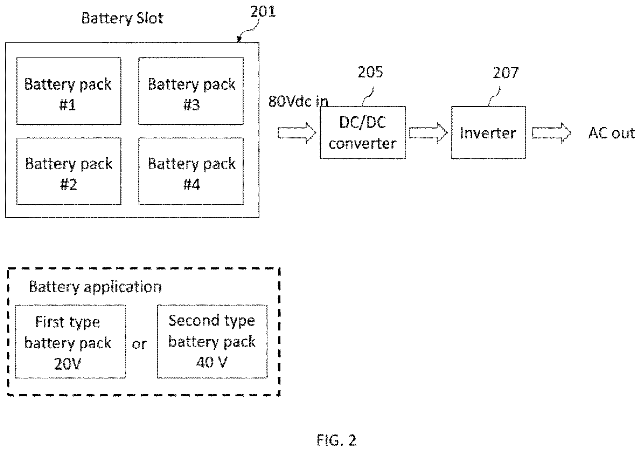

FIG. 2 shows a schematic diagram of a power supply module, including a plurality of battery packs, proposed by the present invention to discharge electricity to (or to power) an electronic device according to the aforementioned idea, especially applicable to inverters, but not limited thereto; wherein the power supply module 201 is set in the battery slot, which includes battery pack #1, battery pack #2, battery pack #3 and battery pack #4 mounted in the battery slot, providing 80V DC voltage (80Vdc) to a DC/DC converter 205, after the voltage being stabilized by the DC/DC converter 205, the regulated DC power is then converted into AC output power by the inverter 207. According to the concept of the present invention, the battery pack is no longer limited to a single-type battery pack. In one embodiment, the battery pack can be a first type battery pack (20V) or a second type battery pack (40V), and the inverter 207 can use the first type battery pack (20V) or the second type battery pack (40V) to discharge electric power to (or power) a coupled load or device.

In one embodiment, if the power supply module installed in the battery slot needs to provide a target voltage of 80V to the DC/DC converter, the battery slot can be set as (a) single-slot discharge mode configuration, i.e., four first-type battery packs (20V) are connected in series to form a battery pack unit and installed in the battery slot; (b) double-slot discharge mode configuration, i.e., the battery slot is equipped with four second-type batteries (40V), and two battery packs of the four second-type batteries are connected in series to form a battery pack unit, which are respectively installed in one of the double-slot battery slots to form a battery pack in double-slot discharge mode configuration.

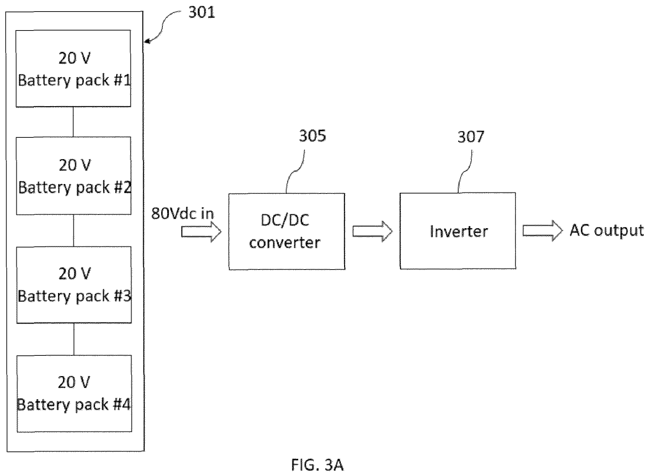

FIG. 3A shows a schematic diagram of a battery pack configuration with a single-slot discharge mode proposed by the present invention for discharging electric power to electronic components, such as an inverter system. The power supply module 301 is arranged in the battery slot, which includes four first-type battery packs (20V), namely 20V battery pack #1, 20V battery pack #2, 20V battery pack #3 and 20V battery pack #4 installed in the battery slot and connected in series to form a serial battery pack unit, configuring battery packs with single-slot discharge mode and providing 80V DC voltage (80Vdc) to a DC/DC converter 305. After the 80 Vdc is stabilized by the DC/DC converter 305, the regulated DC power is then passed through the inverter 307 to convert into to AC output power.

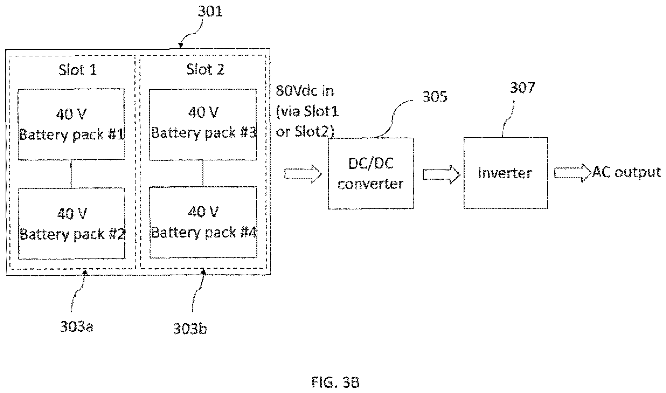

FIG. 3B is a schematic diagram of a battery pack configuration with a dual-slot discharge mode proposed by the present invention for discharging electric power to the inverter. The power supply module 301 is arranged in the battery slot, which includes four second-type batteries (40V), namely 40V battery pack #1, 40V battery pack #2, 40V battery pack #3 and 40V battery pack #4, and two battery packs of the four second-type batteries are connected in series to form a serial battery pack unit. For example, the first serial battery pack unit 303a is composed of 40V battery pack #1 and 40V battery pack #2 connected in series, and the second serial battery pack unit 303b is composed of 40V battery pack #3 and 40V battery pack #4 connected in series. The first serial battery pack unit 303a and the second serial battery pack unit 303b are respectively arranged in first slot (slot 1) and second slot (slot 2) to form a configuration of dual-slot discharge mode, providing 80V DC voltage (80Vdc) to the DC/DC converter 305. After the 80 Vdc is stabilized by the DC/DC converter 305, the regulated DC power is then passed through the inverter 307 to convert into to AC output power.

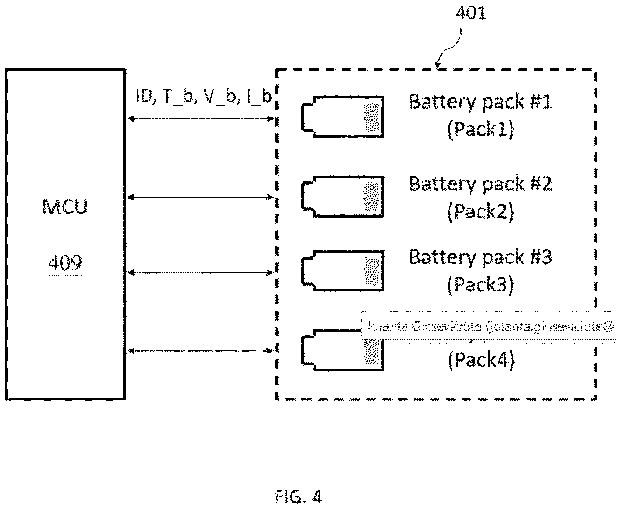

The present invention proposes to determine the battery pack type by connecting the power supply module 401 through a microcontroller (MCU) 409. Referring to FIG. 4, MCU 409 can recognize which type of the battery pack is categorized, i.e. the first type battery pack (type 1, 20V) or the second type battery pack (type 2, 40V)), and determine the discharge mode of the battery pack by receiving individual battery's parameters, such as real-time temperature (T_b), voltage value (V_b) and current value (I_b) of the battery pack, respectively collected through temperature sensors, voltage detection circuit and current detection circuit.

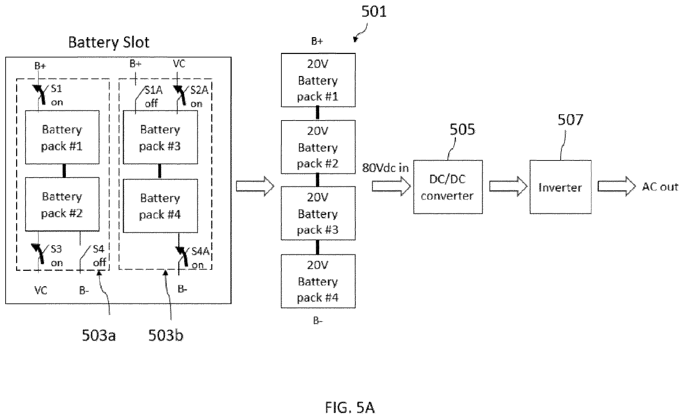

In addition, the MCU can determine which way to discharge electricity to (or power) the inverter, such as in single-slot discharge mode or dual-slot discharge mode, based on types of the battery packs and switch combinations arranged in between battery packs. For specific implementation, please refer to the description of the examples listed in FIGS. 5A-5C .

FIG. 5A shows a schematic diagram of discharging to the inverter 507 in a single-slot discharge mode in which the MCU determines the type of the battery pack through related battery parameters and the combination of switches. There are two sets of serial battery pack unit, i.e., a first serial battery pack unit 503a and a second serial battery pack unit 503b, each set consisting of two battery packs connected in series, arranged in the battery slot. A first end of the first serial battery pack unit 503a, which includes a battery pack #1 connected in series with a battery pack #2, is connected to its positive output terminal (B+) through switch S1, and its second end is respectively connected to the common interconnection node (VC) between these two serial battery pack units (503a and 503b) through switch S3 and the negative output terminal (B-) of the first serial battery pack unit 503a through switch S4. Similarly, the first end of the second serial battery pack unit 503b, which includes a battery pack #3 connected in series with a battery pack #4, is respectively connected to the common interconnection node (VC) through switch S2A_and its positive output terminal (B+) through switch S1A, the second end of which is connected to negative output terminal (B-) of the second serial battery pack unit 503b through switch S4A. When the MCU discriminates that all the battery packs are belonged to the first type battery pack (type1, 20V), the MCU can control the switches S1, S3, S2A, and S4A to close circuit (ON state), and the remaining switches S1A and S4 to open circuit (OFF state), enabling that the first serial battery pack unit 503a and the second serial battery pack unit 503b are connected in series to form a single serial battery pack unit, which are composed of battery pack #1, battery pack #2, battery pack #3 and battery pack #4, to act as a power supply module 501 for discharging electric power to the inverter 507 in single-slot discharge mode after being boosted by the DC/DC converter 505.

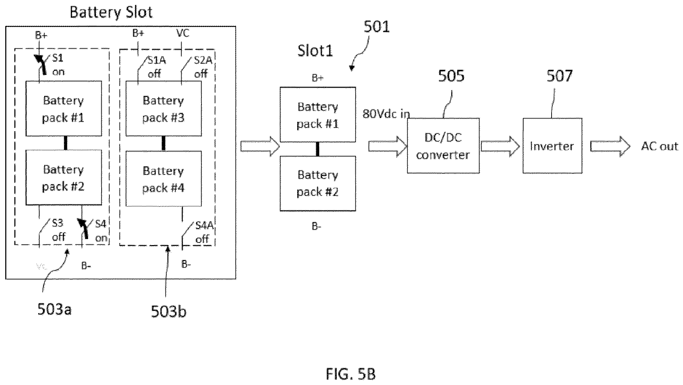

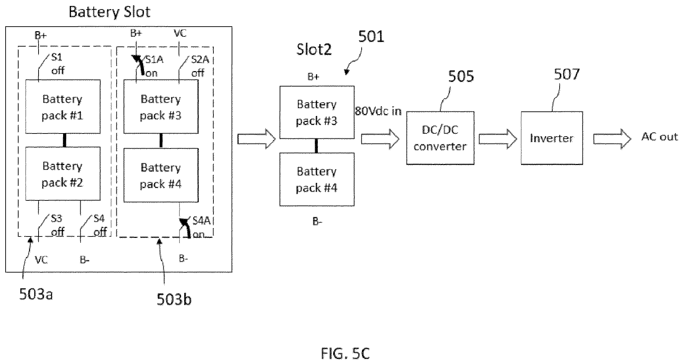

FIG. 5B-5C respectively illustrate schematic diagram of discharging to the inverter in a dual-slot discharge mode in which the MCU determines the type of the battery pack and the combination of switches. There are two sets of serial battery pack unit, i.e., a first serial battery pack unit 503a and a second serial battery pack unit 503b, each set consisting of two battery packs connected in series, arranged in the battery slot. A first end of the first serial battery pack unit 503a, which includes a battery pack #1 connected in series with a battery pack #2, is connected to its positive output terminal (B+) through switch S1, and its second end is respectively connected to the common interconnection node (VC) between these two serial battery pack units (503a and 503b) through switch S3 and the negative output terminal (B-) of the first serial battery pack unit 503a through switch S4. Similarly, the first end of the second serial battery pack unit 503b, which includes a battery pack #3 connected in series with a battery pack #4, is respectively connected to the common interconnection node (VC) through switch S2A and its positive output terminal (B+) through switch S1A, the second end of which is connected to negative output terminal (B-) of the second serial battery pack unit 503b through switch S4A. When the MCU discriminates that all the battery packs are belonged to the second type battery pack (type2, 40V), the MCU can further justify which one of these two sets of serial battery pack unit (503a, 503b) is suitable to discharge electric power to the inverter 507. In the case that the first serial battery pack unit 503a is suitable to discharge to the inverter 507, please refers to FIG. 5B, MCU can control switches S1 and S4 closed circuit (ON state) and the remaining switches S1A, S2A, S3 and S4A in opened circuit (OFF state), enabling that the first serial battery pack unit 503a composed of battery pack #1 and battery pack #2 to act as a power supply module 501 for discharging electric power to the inverter 507 in dual-slot discharge mode after being boosted by the DC/DC converter 505. Similarly, In the case that the second serial battery pack unit 503b is suitable to discharge to the inverter 507, please refers to FIG. 5C, MCU can control switches S1A and S4 A closed circuit (ON state) and the remaining switches S1A, S2A, S3 and S4 in opened circuit (OFF state), enabling that the second serial battery pack unit 503b composed of battery pack #3 and battery pack #4 to act as a power supply module 501 for discharging electric power to the inverter 507 in dual-slot discharge mode after being boosted by the DC/DC converter 505.

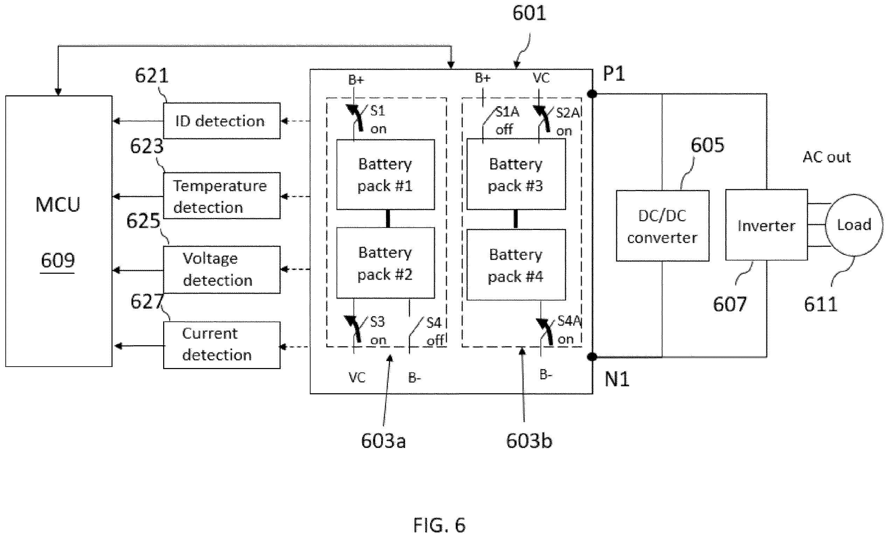

FIG. 6 illustrates a schematic diagram of system in which a battery packs in a power supply module 601 configured to discharge electric power to an inverter 607 of a power system, for example a power tool, and a load 611 connected to the inverter 607. In one embodiment, the power supply module 601 includes a first serial battery pack unit 603a with battery pack #1 and battery pack #2 connected in series and a second serial battery pack unit 603b with battery pack #3 and battery pack #4 connected in series, where the first battery series unit 503a and the second battery series unit 603b can be configured through a plurality of switches controlled by the MCU 609 according to the battery parameters and identification (ID) information detected and collected by the MCU 609. The power supply module 601 is therefore able to operate in a single-slot discharge mode or in a double-slot discharge mode to discharge/power the load (such as a motor) coupled to the inverter 607 through controlling the closed-circuit/open-circuit states of individual switches by MCU 609.

In one embodiment, the single-slot discharge mode is a discharge mode that all battery packs are connected in series to form a single serial battery pack unit for discharging electric power; the dual-slot discharge mode is a discharge mode that a portion of all battery packs are connected in series to form more than one serial battery pack unit and one of them, for example, one of the first serial battery pack series and the second serial battery pack unit, is utilized to be a discharge mode for discharging electric power.

In one embodiment, the battery parameters include battery temperature T_b, battery voltage V_b and battery current I_b.

In one embodiment, the identification (ID) information and battery parameters of the battery packs in the power supply module 601 can be collected through the ID detection circuit 621, temperature detection circuit 623, voltage detection circuit 625 and current detection circuit 627 and be passed to the MCU 609. The identification (ID) information can be detected by a detection circuit, which can be the ID pin of the MCU 609, or can be obtained through communication between the MCU and the battery pack (for example, in a wireless communication mode).

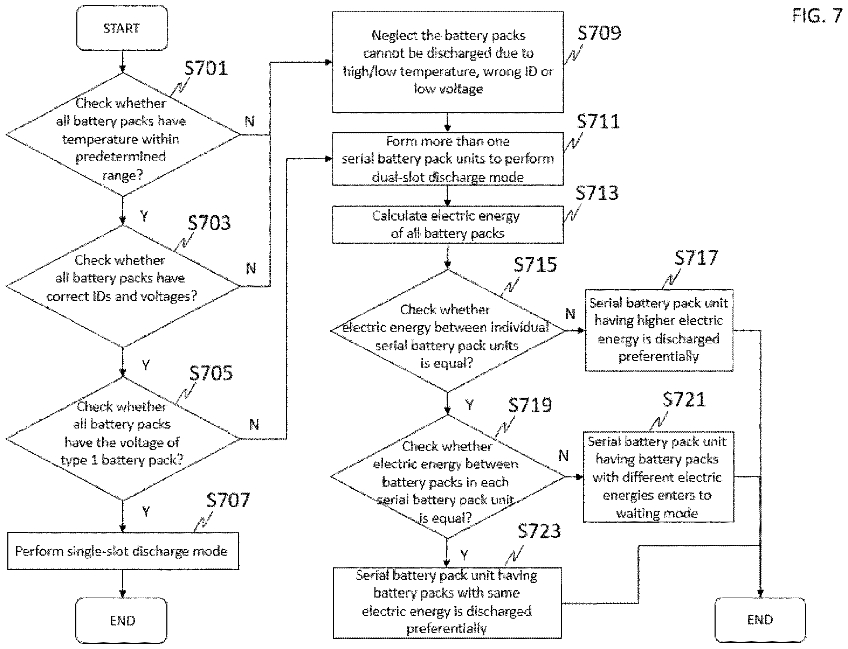

FIG. 7 shows a flowchart of a battery control method for inverter applications according to an embodiment of the present invention; referring to FIGS. 2-6, since the type of the battery packs in the power supply module is not unique, which can be the first type (type 1, 20V) or the second type (type 2, 40V) battery pack, the battery packs can be combined and configured to form various discharge modes through controlling switch configurations between battery packs (or serial battery pack units) based on the received battery parameters from MCU, increasing the flexibifity and commonality of the battery pack. To achieve the above object, in one embodiment, the present invention proposes a flow chart of a smart battery control method, which can be applied to discharge electric power to the inverter of a power tool. The method includes the following steps:
first, in step S701, checking whether the temperatures of all battery packs are within the predetermined temperature range through a controller, such as MCU, if not, execute step S709;
in step S703, checking whether the identification (ID) information and voltages of all battery packs are correct through a controller, such as MCU, if not, execute step S709;
in step S705, checking whether the voltage of all battery packs is the voltage of the first type battery pack through a controller, such as MCU, if not, go to step S711;
if it is true, that is, all the battery packs are first type battery pack, in step S707, through a controller, such as an MCU, controlling the switch configuration between the battery packs, enabling that all the first type battery packs are connected in series to form a single serial battery pack unit, performing a single-slot discharge mode (first discharge mode) to the inverter;
if the temperature of the battery pack is not within the predetermined temperature range or the ID and voltage of the battery pack are incorrect, in step S709, skipping the battery pack that cannot be discharged due to high/low temperature, wrong ID or low voltage;
in step S711, controlling the switch configuration between the battery packs through a controller, such as an MCU, enabling that all the remaining battery packs not being skipped to be connected in series in groups of two to form more than one set of serial battery pack units, and one of the serial battery pack units performing a dual-slot discharge mode (second discharge mode) to the inverter;
in step S713, receiving the battery parameters of all battery packs and calculating the electric energy of all battery packs through the controller, such as MCU;
in step S715, comparing the electric energy between individual serial battery pack units, such as the first serial battery pack unit or the second serial battery pack unit, through the controller, such as MCU, checking whether the electric energy between them is equal, if not, the serial battery pack unit with higher electric energy is used to preferentially discharge to the inverter (step S717);
if the electric energy between individual serial battery pack units (for example, the first serial battery pack unit or the second serial battery pack unit) is equal, in step S719, checking whether the electric energy between the two battery packs in each serial battery pack unit is the same through a controller, such as MCU, if not, the serial battery pack unit with battery packs having different electric energy enters to waiting mode (step S721);
if yes, the serial battery pack unit with battery packs having the same electrical energy discharges to the inverter preferentially.

In one embodiment, the controller may be a microprocessor, a microcontroller (MCU), a logic operation unit or other controllers with similar functions.

In one embodiment, the single-slot discharge mode can be regarded as the first discharge mode; the dual-slot discharge mode can be regarded as the second discharge mode.

According to the above descriptions, the smart battery control method for inverter application proposed by the present invention can provide the following advantages:
(i) the second-generation inverter of the power system (for example, a power tool) is introduced into 40V dual-slot discharge mode, where the user can take out the battery in slot 1 (that is, the system, such as a power tool, can skip the battery in slot 1) and the battery pack of slot 2 is used for power supply, and vice versa;
(ii) the power system (for example, a power tool) can make intelligent judgments through its MCU, which can make the second-generation inverter have the opportunity to use both 20V and 40V batteries, improving the shortcomings of the first-generation inverter, which only has 20V single slot discharge mode discharge, and there is no discharge function as long as any battery is unplugged, where the intelligent judgment and controlling of switch configuration through the MCU can increase the flexibifity of battery usage and battery sharing.

While various embodiments of the present invention have been described above, it should be understood that they have been presented by a way of example and not limitation. Numerous modifications and variations within the scope of the invention are possible. The present invention should only be defined in accordance with the following claims and their equivalents.

## Claims

1. A method of smart battery control for a power supply module (201, 301) controlled by a controller (409, 609), wherein said power supply module (201, 301) includes a plurality of battery packs having at least a first type or second type battery pack, said method **characterized by** comprising steps of:
checking whether said plurality of battery packs are all in a normal state that can be discharged and categorized into said first type battery pack (S705);
if yes, said power supply module discharges electric power by a first discharge mode (S707);
otherwise, neglecting the abnormal battery packs (S709) and forming serial battery pack units among remaining battery packs (S711), said power supply module discharging electric power by a second discharge mode (S711);
calculating electric energy of said plurality of battery packs (S713), comparing electric energy of individual serial battery pack unit (S715), and scheduling discharge priority among said serial battery pack units.

2. The method of smart battery control of claim 1, **characterized in that** said steps of scheduling discharge priority includes:
when electrical energy between said individual serial battery pack units is different, said serial battery unit with higher electrical energy is discharged preferentially (S717); and
when electric energy between said individual serial battery pack units is the same, check whether electric energy of battery packs in each serial battery pack unit is the same (S719), enabling that serial battery pack unit composed of battery packs with the same electric energy is discharged preferentially (S723), and serial battery pack unit composed of battery packs with different electric energies enters to waiting mode (S721).

3. The method of smart battery control of claim 1, **characterized in that** said step of checking whether said plurality of battery packs are all in a normal state includes checking whether temperatures of said plurality of battery packs are within a predetermined temperature range (S701), and checking whether identification information and voltages of said plurality of battery packs are correct (S703).

4. The method of smart battery control of claim 1, **characterized in that** said first type battery pack has a different output voltage than that of said second type battery pack.

5. The method of smart battery control of claim 4, **characterized in that** said first discharge mode is a discharge mode that all said plurality of battery packs in said power supply module (201, 301) are connected in series to form a single serial battery pack unit used for discharging.

6. The method of smart battery control of claim 4, **characterized in that** said second discharge mode is a discharge mode that all or a portion of said plurality of battery packs in said power supply module (201, 301) are connected in series to form more than one serial battery pack units used for discharging.

7. The method of smart battery control of claim 5, **characterized in that** said first discharge mode is performed through controlling open-circuit and closed-circuit configurations of a plurality of switches disposed between said battery packs by said controller (409, 609).

8. The method of smart battery control of claim 6, **characterized in that** said second discharge mode is performed through controlling open-circuit and closed-circuit configurations of said plurality of switches disposed between said serial battery pack units by said controller (409, 609).

9. The method of smart battery control of claim 1, **characterized in that** said controller is a processor, a microcontroller, or a logic operation unit.

10. The method of smart battery control of claim 1, wherein said power supply module is used to discharge electric power to an inverter (207, 307, 507, 607).

11. A method of smart battery control for a power supply module (201, 301) controlled by a controller (409, 609), wherein said power supply module (201, 301) includes a plurality of battery packs having at least a first type or second type battery pack, said method **characterized by** comprising steps of:
checking whether said plurality of battery packs are all in a normal state that can be discharged and categorized into said first type battery pack (S705), which includes checking whether temperatures of said plurality of battery packs are within a predetermined temperature range (S701), and checking whether identification information and voltage of said plurality of battery pack are correct (S703);
if yes, said power supply module discharges electric power by a first discharge mode (S707);
otherwise, neglecting the abnormal battery packs (S709) and forming serial battery pack units among remaining battery packs (S711), said power supply module discharging electric power by a second discharge mode (S711);
calculating electric energy of said plurality of battery packs (S713), comparing electric energy of individual serial battery pack unit (S715), and scheduling discharge priority among said serial battery pack units.

12. The method of smart battery control of claim 1, **characterized in that** said steps of scheduling discharge priority includes:
when electrical energy between said individual serial battery pack units is different, said serial battery unit with higher electrical energy is discharged preferentially (S717); and
when electric energy between said individual serial battery pack units is the same, check whether electric energy of battery packs in each serial battery pack unit is the same (S719), enabling that serial battery pack unit composed of battery packs with the same electric energy is discharged preferentially (S723), and serial battery pack unit composed of battery packs with different electric energies enters to waiting mode (S721).

13. The method of smart battery control of claim 11, **characterized in that** said first type battery pack has a different output voltage than that of said second type battery pack.

14. The method of smart battery control of claim 13, **characterized in that** said first discharge mode is a discharge mode that all said plurality of battery packs in said power supply module (201, 301)are connected in series to form a single serial battery pack unit used for discharging.

15. The method of smart battery control of claim 13, **characterized in that** said second discharge mode is a discharge mode that all or a portion of said plurality of battery packs in said power supply module (201, 301) are connected in series to form more than one serial battery pack units used for discharging.
